Europäisches Patentamt

European Patent Office

Office européen des brevets

(19)

(11) Veröffentlichungsnummer: **0 177 804 B1**

(12) **EUROPÄISCHE PATENTSCHRIFT**

(45) Veröffentlichungstag der Patentschrift: **11.11.92**

(51) Int. Cl.⁵: **G06K 11/10**

(21) Anmeldenummer: **85111645.9**

(22) Anmeldetag: **14.09.85**

(54) **Stromspeiseschaltung für ein Digitalisiertablett.**

(30) Priorität: **05.10.84 DE 3436640**

(43) Veröffentlichungstag der Anmeldung:
**16.04.86 Patentblatt 86/16**

(45) Bekanntmachung des Hinweises auf die
Patenterteilung:
**11.11.92 Patentblatt 92/46**

(84) Benannte Vertragsstaaten:
**CH DE FR GB IT LI**

(56) Entgegenhaltungen:
**GB-A- 2 131 955**
**US-A- 4 166 974**

(73) Patentinhaber: **KONTRON ELEKTRONIK GMBH**
**Oskar-von-Miller-Strasse 1**
**W-8057 Eching(DE)**

(72) Erfinder: **Jacob-Grinschgl, Wolfgang**
**Rumfordstrasse 40**
**W-8000 München(DE)**
Erfinder: **Sommer, Bernd, Dr.**
**Am Schlott 10 a**
**W-8051 Zolling(DE)**

(74) Vertreter: **Dirscherl, Josef et al**
**c/o Bayerische Motoren Werke Aktiengesell-**
**schaft, Patentabteilung AJ-3, Postfach 40 02**
**40, Petuelring 130**
**W-8000 München 40(DE)**

## Beschreibung

Die Erfindung betrifft eine Stromspeiseschaltung nach dem Oberbegriff des Patentanspruchs 1.

Digitalisiertabletts sind mit einer Reihe in gleichem Abstand und kreuzweise angeordneter Gitterleitungen versehen, durch die gewöhnlich nacheinander ein gleichbleibender Strom geschickt wird, der auf einen auf dem Tablett liegenden induktiven Meßaufnehmer einwirkt. Um eine möglichst hohe Genauigkeit in der Positionsbestimmung des Meßaufnehmers zu erreichen, ist es erforderlich, daß durch jede der Gitterleitungen der gleiche Strom fließt. Dies wird bei den bekannten Stromspeiseschaltungen dadurch erreicht, daß die Stromamplitude geregelt wird, etwa mit Hilfe einer Konstantstromquelle. Eine Überwachungsschaltung spricht dabei an, wenn die Stromamplitude einen vorher eingestellten Minimalwert unterschreitet.

Der Nachteil einer derartigen Stromspeiseschaltung liegt darin, daß die Überwachungsschaltung erst anspricht, wenn bereits ein Meßfehler aufgetreten ist.

Der Erfindung liegt die Aufgabe zugrunde, eine Stromspeiseschaltung der eingangs genannten Art zu schaffen, bei der die Überwachungsschaltung schon anspricht, bevor der Konstantstrom sich geändert hat.

Diese Aufgabe wird bei einer Stromspeiseschaltung eingangs genannter Art durch die Merkmale des Patentanspruchs 1 gelöst.

Durch die erfindungsgemäße Stromspeiseschaltung wird erreicht, daß die Konstantstromquelle niemals in den Sättigungsbereich geraten kann, so daß der durch die verschiedenen Gitterleitungen fließende Strom mit großer Genauigkeit konstant bleibt.

Vorzugsweise überwacht die Überwachungsschaltung die gesamte Impedanz der einzelnen Gitterleitungen und der sonstigen in Reihe mit diesen an die Konstantstromquelle angeschlossenen Teile des Leitungskreises. Dadurch wird gewährleistet, daß alle kritischen Bauteile wie Schalter, Trenndioden, Anschlußstecker und dgl. in die Überwachung einbezogen werden.

Gemäß einer besonderen Ausführungsform der Erfindung umfaßt die Überwachungsschaltung einen Spannungskomparator zum Vergleichen des Spannungsabfalls an dem überwachten Teil jedes Leitungskreises mit einer Sollspannung. Da jede Impedanzänderung wegen des Konstantstromes eine damit proportionale Spannungsänderung des Spannungsabfalls an dem überwachten Teil eines Leitungskreises herbeiführt, läßt sich auf diese Weise eine besonders einfache Überwachungsschaltung realisieren.

Gemäß einer Weiterbildung der Erfindung steuert der Spannungskomparator einen Schalter. Dieser kann dazu dienen, das Digitalisiertablett abzuschalten und/oder eine Anzeigevorrichtung zu aktivieren, um auf einen Fehler aufmerksam zu machen.

Gemäß einer Weiterbildung der Erfindung kann die Sollspannung von einem Blind-Leitungskreis abgenommen werden, der einen in das Tablett integrierten Zusatzwiderstand mit einem Widerstandswert entsprechend dem Sollwiderstand eines überwachten Teiles eines Leitungskreises umfaßt. Auf diese Weise läßt sich die Überwachungsschaltung ohne Änderung in Verbindung mit unterschiedlichen Digitalisiertabletts verwenden.

Die Erfindung ist im folgenden anhand einer schematischen Zeichnung an einem Ausführungsbeispiel ergänzend beschrieben.

Die einzige Figur zeigt ein Schaltbild einer Stromspeiseschaltung mit den zu einer Koordinatenrichtung gehörenden Gitterleitungen eines Digitalisiertabletts.

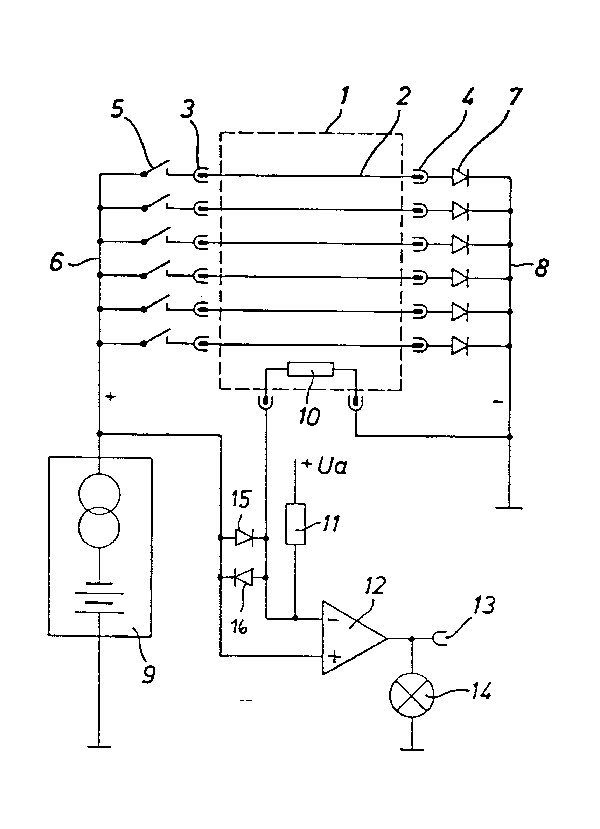

Die in Figur 1 dargestellte Schaltung zeigt ein Digitalisier- oder Meßtablett 1, auf dem in gleichem Abstand voneinander eine Anzahl Gitterleiter 2 befestigt sind.

Die einen Enden dieser Gitterleiter sind über Anschlußbuchsen 3 jeweils mit einem steuerbaren Schalter 5 verbunden, deren einer Pol an eine positive Speiseleitung 6 angeschaltet ist.

Die anderen Enden der Gitterleiter 2 sind über Anschlußbuchsen 4 jeweils mit einer Trenndiode 7 verbunden, deren andere Enden an eine negative Speiseleitung 8 angeschlossen sind.

An diese Speiseleitungen ist eine Konstantstromquelle 9 angeschaltet, die die Aufgabe hat, den jeweils eingeschalteten Gitterleiter mit einem konstanten Strom während der Einschaltzeit zu versorgen.

Jeder Gitterleiter 2 bildet mit den zugeordneten Anschlußbuchsen 3 und 4 sowie dem steuerbaren Schalter 5 und der Trenndiode 7 den überwachten Teil eines Leitungskreises.

Die Überwachungsschaltung umfaßt einen Spannungskomparator 12 mit einem Differenzverstärker, dessen N-Eingang an den Abgriff eines Spannungsteilers angeschlossen ist, der aus einem Referenzwiderstand 10 gebildet ist, der einseitig an Masse angeschaltet ist, sowie einen Spannungsteilerwiderstand 11, der mit dem Pluspol einer Speisespannungsquelle Ua verbunden ist.

Der P-Eingang des Spannungskomparators 12 ist mit der positiven Speiseleitung 6 verbunden. Beide Eingänge sind über anti-parallel geschaltete Dioden 15 und 16 miteinander verbunden.

An den Ausgang 13 des Spannungskomparators 12 ist eine Anzeigelampe 14 angeschaltet.

Die Schaltung hat folgende Wirkungsweise. Der Referenzwiderstand 10, der in das Digitalisiertablett integriert ist, hat einen Widerstandswert, der der Summe der Sollwiderstände des Gitterleiters 2, der Buchsen 3 und 4, des Schalters 5 und der Trenndiode 7 bei einem gegebenen Konstantstrom entspricht. Der Spannungsteilerwiderstand 11 ist so gewählt oder eingestellt, daß die Spannung am P-Eingang des Spannungskomparators 12 kleiner ist als die Spannung am N-Eingang, falls der überwachte Leitungskreis in Ordnung ist, so daß der Ausgang 13 keine Spannung führt.

Wenn der Widerstand des überwachten Leitungskreises jedoch einen gewissen Wert übersteigt, dann erhöht sich auch der Spannungsabfall proportional an demselben, so daß dann der P-Eingang positiver wird als der N-Eingang des Spannungskomparators 12 und der Ausgang 13 sodann Spannung führt und die Anzeigelampe 14 aufleuchtet.

Die Dioden 15 und 16 dienen lediglich zur Begrenzung der Eingangsübersteuerung des Differenzverstärkers.

Die dargestellte Schaltung reagiert sehr empfindlich selbst auf kleinste Änderungen des Sollwiderstandes, und man hat es in der Hand, durch Bemessung des Spannungsteilers am N-Eingang zu bestimmen, bei welcher prozentualen Abweichung von dem Widerstandssollwert die Überwachungsschaltung ansprechen soll. Die Ansprechschwelle kann auf jeden Fall so gelegt werden, daß die Konstantstromquelle 9 innerhalb ihres Arbeitsbereichs bleibt.

**Patentansprüche**

1. Stromspeiseschaltung für die Gitterleitungen (2) eines Digitalisiertabletts, mit mindestens einer Konstantstromquelle (9), mit einer Schalteinrichtung (5) zum Anschalten der Gitterleitungen (2) nacheinander in einer bestimmten Reihenfolge an die Konstantstromquelle (9) und mit einer Überwachungsschaltung (10 bis 16) für die Gitterleitungen (2) enthaltenden Leitungskreise (2 bis 8),
dadurch gekennzeichnet, daß die Überwachungsschaltung (10 bis 16) die Impedanz mindestens des die Gitterleitungen (2) enthaltenden Teiles jedes Leitungskreises (2 bis 8) überwacht und daß die Überwachungsschaltung (10 bis 16) das Digitalisiertablett (1) abschaltet und/oder eine Anzeigevorrichtung (14) aktiviert, bevor die Konstantstromquelle (9) in ihren Sättigungsbereich gerät, wenn die Impedanz einen gewissen Wert übersteigt.

2. Stromspeiseschaltung nach Anspruch 1,
dadurch gekennzeichnet, daß die Überwachungsschaltung (10 bis 16) die gesamte Impedanz der einzelnen Gitterleitungen (2) und der sonstigen in Reihe mit diesen an die Konstantstromquelle (9) angeschlossenen Teile (3 bis 8) des Leitungskreises (2 bis 8) überwacht.

3. Stromspeiseschaltung nach Anspruch 1 oder 2, dadurch gekennzeichnet, daß die Überwachungsschaltung (10 bis 16) einen Spannungskomparator (12) zum Vergleichen des Spannungsabfalles an dem überwachten Teil jedes Leitungskreises (2 bis 8) mit einer Sollspannung umfaßt.

4. Stromspeiseschaltung nach Anspruch 3, dadurch gekennzeichnet, daß der Spannungskomparator (12) einen Schalter steuert.

5. Stromspeiseschaltung nach Anspruch 3 oder 4, dadurch gekennzeichnet, daß die Sollspannung von einem Blind-Leitungskreis abgenommen wird, der einen in das Tablett integrierten Zusatzwiderstand (10) mit einem Widerstandswert entsprechend dem Sollwiderstand eines überwachten Teiles eines Leitungskreises (2 bis 8) umfaßt.

**Claims**

1. A current supply circuit for the grid lines (2) of a digitising tablet, comprising at least one constant current source (9) with a switching device (5) for connecting in the grid lines (2) in succession in a particular sequence to the constant current source (9) and with a monitoring circuit (10 to 16) for the conducting circuits (2 to 8) containing grid lines (2),
characterised in that the monitoring circuit (10 to 16) monitors the impedance at least of the part of each conducting circuit (2 to 8) containing the grid lines (2) and that the monitoring circuit (10 to 16) switches off the digitising tablet (1) and/or activates a display device (14), before the constant current source (9) reaches its saturation range, when the impedance exceeds a certain value.

2. A current supply circuit according to Claim 1, characterised in that the monitoring circuit (10 to 16) monitors the entire impedance of the individual grid lines (2) and the other parts (3 to 8) of the conducting circuit (2 to 8) connected in series therewith to the constant current source (9).

3. A current supply circuit according to Claim 1 or 2, characterised in that the monitoring circuit (10 to 16) comprises a voltage comparator (12) to compare the voltage drop on the monitored part of each conducting circuit (2 to 8) with a rated voltage.

4. A current supply circuit according to Claim 3, characterised in that the voltage comparator (12) controls a switch.

5. A current supply circuit according to Claim 3 or 4, characterised in that the rated voltage is taken from a blind conducting circuit, which comprises a supplementary resistance (10), integrated into the tablet, with a resistance value corresponding to the rated resistance of a monitored part of a conducting circuit (2 to 8).

**Revendications**

1. Circuit d'alimentation en courant pour les liaisons en grille (2) d'une tablette de numérisation, avec au moins une source de courant constant (9), avec un dispositif de commutation (5) pour raccorder les liaisons en grille (2) successivement selon une série déterminée à la source de courant constant (9) et avec un circuit de surveillance (10 à 16) pour les circuits de liaison (2 à 8) contenant les liaisons en grille (2),
circuit d'alimentation en courant, caractérisé en ce que le circuit de surveillance (10 à 16) surveille l'impédance d'au moins la partie de chaque circuit de liaison (2 à 8) contenant les liaisons en grille (2) et en ce que ce circuit de surveillance (10 à 16) met hors circuit la tablette de numérisation (1) et ou active un dispositif indicateur (14), avant que la source de courant constant (9) arrive dans sa zone de saturation, lorsque l'impédance dépasse une certaine valeur.

2. Circuit d'alimentation en courant suivant la revendication 1, caractérisé en ce que le circuit de surveillance (10 à 16) surveille l'impédance totale des différentes liaisons en grille (2) et des autres parties (3 à 8) du circuit de liaison (2 à 8) raccordées avec ces liaisons en grille à la source de courant constant (9).

3. Circuit d'alimentation en courant selon la revendication 1 ou la revendication 2, caractérisé en ce que le circuit de surveillance (10 à 16) comprend un comparateur de tension (12) pour comparer la chute de tension sur la partie surveillée de chaque circuit de liaison (2 à 8) avec une tension de consigne.

4. Circuit d'alimentation en courant selon la revendication 3, caractérisé en ce que le comparateur de tension (12) commande un commutateur.

5. Circuit d'alimentation en courant selon la revendication 3 ou la revendication 4, caractérisé en ce que la tension de consigne est prélevée à partir d'un circuit de liaison de réactance qui comprend une résistance supplémentaire (10) intégrée dans la tablette avec une valeur ohmique correspondant à la résistance de consigne d'une partie surveillée d'un circuit de liaison (2 à 8).